Europäisches Patentamt

European Patent Office

Office européen des brevets

(19)

(11) Veröffentlichungsnummer: **0 337 921**
**A2**

(12) # EUROPÄISCHE PATENTANMELDUNG

(21) Anmeldenummer: **89710024.4**

(22) Anmeldetag: **10.04.89**

(51) Int. Cl.4: **G 07 F 1/06**
G 07 D 3/14, G 06 K 19/08,
A 63 F 5/00

(30) Priorität: **09.04.88 DE 3811905**

(43) Veröffentlichungstag der Anmeldung:
**18.10.89 Patentblatt 89/42**

(84) Benannte Vertragsstaaten: **AT FR GB**

(71) Anmelder: **Rollnik, Ewald**
**Roermonderstrasse 616**
**D-5100 Aachen (DE)**

(72) Erfinder: **Rollnik, Ewald**
**Roermonderstrasse 616**
**D-5100 Aachen (DE)**

(54) **Anordnung zum Erkennen und Sichern von Gegenständen sowie deren Verwendung.**

(57) Bei einer Anordnung zum Erkennen eines Gegenstandes, der ein von einem Lichtstrahl beleuchtetes Kodierungsfeld aufweist, dessen Bild in einem einem Lichtempfänger nachgeschalteten Rechner mit einem Soll-Bild verglichen wird, ist der Lichtstrahl als kohärenter Lichtstrahl ausgebildet und das Kodierungsfeld trägt ein von diesem beleuchtbares Hologramm.

Da jeder Punkt eines Hologramms dessen Gesamtinformation beinhaltet, braucht selbst beim Ablesen mit sehr hoher Auflösung die Lage des Gegenstandes relativ zur Anordnung nicht genau eingehalten werden.

Eine solche Anordnung ist bevorzugt in einer Jeton-Sortieranlage angeordnet, die unter einem Roulettetisch angebracht ist und mittels deren alle eingenommenen Jetons gesammelt, vereinzelt, geprüft, zum Lagebrett gefördert und dort geordnet wieder abgelegt werden.

EP 0 337 921 A2

Bundesdruckerei Berlin

**Beschreibung**

## ANORDNUNG ZUM ERKENNEN VON GEGENSTÄNDEN SOWIE DEREN VERWENDUNG

Die Erfindung betrifft eine Anordnung zum Erkennen von Gegenständen.

Anordnungen dieser Art sind bekannt und werden beispielsweise in Geldschein-Lesegeräten angewandt: eine solche bekannte Anordnung weist eine Lichtquelle auf, mittels deren ein solcher Abschnitt des zu erkennenden Gegenstandes beleuchtet wird, welcher die Kodierung dieses Gegenstandes bildet, z.B. ein ganz bestimmter, typischer Abschnitt einer Banknote. Hierbei kann die Beleuchtung sowohl im Auflicht als auch bevorzugt im Durchlicht erfolgen.

Die bekannte Anordnung weist ferner eine Erkennnungsstation auf, in welcher der zu erkennende Gegenstand so positioniert werden muß, daß das Kodierungsfeld im Beleuchtungsbereich der Lichtquelle liegt. Ein Lichtempfänger ist angeordnet, der das Kodierungsfeld gewissermaßen betrachtet, und ist an einen Rechner angeschlossen, der die vom Lichtempfänger ausgehenden Signale auswertet und seinerseits ein Erkennungssignal oder Nichterkennungssignal abgibt. Es kann jeweils auch nur eines dieser Signale abgegeben werden; anstelle des anderen unterbleibt dann ein Signal.

Als Kodierungsfeld kann beispielsweise eine Anzahl markanter Punkte hergenommen werden, die den Lichtdurchtritt ermöglichen oder versperren oder Licht einer bestimmten Farbe durchlassen. Diesen Punkten gegenüberliegend kann der Lichtempfänger von einzelnen Empfangszellen gebildet sein, die diesen genannten einzelnen Betrachtungspunkten gegenüberliegen und je nach Verdecken oder Freigeben des in diesen Punkten einfallenden Lichtstrahles ein entsprechendes Signal an den Rechner weitergeben.

Wird nun eine Banknote fototechnisch kopiert und somit gefälscht, dann treten notwendigerweise typische Verzerrungen auf, welche dazu führen, daß mindestens einer der zur Erkennung herangezogenen Betrachtungspunkte nicht an seiner vorgeschriebenen Stelle sitzt, so daß die Banknote von der bekannten Anordnung nicht akzeptiert wird.

Hierbei ist natürlich eine möglichst große Genauigkeit anzustreben, um auch qualitativ hochstehende Fälschungen zu erkennen. Diese gesteigerte Genauigkeit stellt aber wiederum sehr hohe Anforderungen an die Genauigkeit der Positionierung des zu erkennenden Gegenstandes, im vorliegenden Fall der Banknote, in der Erkennungsstation, was wiederum voraussetzt, daß der zu erkennende Gegenstand möglichst unbeschädigt ist, so daß z.B. der Anschlag gegen eine Kante die genaue Positionierung des Kodierungsfeldes ermöglicht.

Gegen einen solchen Anschlag kann der zu erkennende Gegenstand jedoch nur mit verhältnismäßig geringer Geschwindigkeit auflaufen, um sich selbst und diesen Anschlag nicht zu beschädigen und hiermit die genaue Positionierung zu beeinträchtigen.

Es ist auch möglich, das gesamte Kodierungsfeld in seiner Gesamtheit vom Lichtempfänger aufzunehmen, der seinerseits mit einer Bildaufnahmeröhre oder einer CCD-Platte ausgestattet sein kann. In diesem Fall braucht keine so genaue Positionierung erfolgen, weil der Rechner das aufgenommene Bild daraufhin untersuchen kann, ob die zu erkennende Kombination von Erkennungspunkten im Bildfeld vorliegt oder nicht. Diese sehr komplizierte Rechenoperation erfordert jedoch beträchtliche Re chenzeit, so daß in allen jenen Fällen, in denen - etwa wegen der grossen Menge der zu erkennenden Gegenstände - nur kurze Erkennungszeiten annehmbar sind, man zwangsläufig eine rigorose Beschränkung der Erkennungspunkte durchführen muß, wodurch natürlich die Gefahr fehlerhafter Erkennung sprunghaft ansteigt.

In manchen Bereichen, z.B. bei Scheckkarten oder Berechtigungskarten zum Betreten von Sicherheitsbereichen, ist eine Kodierung auf einem Magnetstreifen vorgesehen, da dieser eine sehr viel kompliziertere Kodierung in relativ rasch ablesbarer Form tragen kann, als dies bei der obengenannten Anordnung mit optischer Ablesung möglich ist.

Nachteilig ist jedoch bei solchen Kodierungen der Umstand, daß sie nachträglich entweder unabsichtlich oder absichtlich verändert werden können: ein Hochspannungsmonteur, der seine Scheckkarte bei Montagearbeiten mit sich führt, kann diese zwangsläufig so starken Magnetfeldern aussetzen, daß ihre Kodierung gestört wird. Andererseits kann ein betrügerischer Computerangestellter einer Bank zu Hause mit einer verhältnismäßig einfachen Apparatur eine vorhandene Scheckkarte so verfälschen, daß sie die fehlerfreie Kodierung eines anderen Kontos trägt.

Das Kopieren einer vorhandenen, elektromagnetischen Kodierung bereitet dem Fachmann keinerlei Schwierigkeiten, so daß jeder zu erkennende Gegenstand zwangsläufig eine individuelle Kodierung tragen muß. Das Aufbringen von Magnetstreifen mit stets gleichbleibender Kodierung etwa an Banknoten erbringt keinerlei Fälschungssicherheit.

Ausgehend von diesem Stand der Technik liegt der Erfindung die Aufgabe zugrunde, die eingangs genannte, bekannte, optische Anordnung dahingehend weiterzubilden, daß einerseits die rasche Ablesung auch einer verhältnismäßig komplizierten Kodierung ermöglicht wird, während andererseits die Herstellung der Kodierung durch Außenstehende so stark erschwert sein soll, daß eine Fälschung praktisch ausgeschlossen ist.

Diese Aufgabe wird durch die Merkmale des Anspruchs 1 gelöst. Hierbei wird die Kodierung im Kodierungsfeld von einem Hologramm gebildet, das, um lesbar zu sein, von kohärentem Licht aus der Lichtquelle beleuchtet wird.

Die Herstellung eines solchen Hologramms ist für den Laien außerordentlich schwierig, verglichen etwa mit der Herstellung eines programmierten Magnetstreifens oder der optischen Abbildung etwa einer Banknote z.B. durch Fotodruck.

Der besondere Vorteil eines Hologramms als Kodierung liegt aber darin, daß jeder Punkt des Hologramms dessen Gesamtinformation enthält, so daß es, um im Lichtempfänger das gesamte Hologramm in seiner vorgeschriebenen Position aufzunehmen, durchaus nicht erforderlich ist, das Kodierungsfeld mit gleicher Genauigkeit zu positionieren, sondern es ist lediglich erforderlich, daß der Lichtstrahl überhaupt durch das Kodierungsfeld und das Hologramm fällt. Es ist sogar möglich, das Kodierungsfeld am Lichtempfänger vorbeizubewegen, während dieser seinerseits das lesbare Hologramm aufnimmt. Hierbei darf lediglich die Geschwindigkeit des zu erkennenden Gegenstands jene Geschwindigkeit nicht überschreiten, bei welcher das Kodierungsfeld den kohärenten Lichtstrahl bzw. Lichtempfänger gerade in einer solchen Zeit passiert, die der zur Erkennung der Kodierung durch Lichtempfänger und Rechner erforderlichen Zeit entspricht.

Als Quelle kohärenten Lichts wird bevorzugt ein Laser verwendet.

Der bisher stets gegebene Zusammenhang zwischen der Ablesegenauigkeit am Lichtempfänger einerseits und der Positionierungsgenauigkeit für den zu erkennenden Gegenstand an einer Erkennungsstation andererseits besteht bei der Erfindung nicht mehr.

Mit der Erfindung ist es nun möglich, etwa eine Erkennungskarte oder Scheckkarte mit einem Kodierungsfenster zu versehen, das die Größe von wenigen Millimetern, bevorzugt z.B. 2 mm Durchmesser oder im Quadrat, aufweisen kann und das von einem Hologramm ausgefüllt ist. Eine solche Erkennungskarte muß etwa in den Schlitz eines Türöffners so eingeschoben werden, daß das Kodierungsfeld überhaupt in den kohärenten Lichtstrahl der Lichtquelle gelangt. Ist dies der Fall, dann kann selbst eine außerordentlich komplizierte Kodierung rasch gelesen werden, und zwar selbst dann, wenn die die Erkennungskarte vorweisende Person diese Karte nicht ruhig halten sollte.

Auch bei der erfindungsgemäßen Anordnung wird im Lichtempfänger an bestimmten Stellen ein Lichtreiz ausgelöst, wobei die Kodierung eine ganz bestimmte Kombination der Lichtreize bildet.

Es ist nun denkbar, daß durch Zufall oder infolge planmäßiger Untersuchung eines Fälschers es gelingt, ein Hologramm zu finden, das im Lichtempfänger die gleichen Lichtreize auslöst wie die Kodierung. Je feiner das Raster der Lichtreize ist, und je größer die Anzahl der zur Erkennung herangezogenen Lichtpunkte ist, desto geringer ist die Möglichkeit einer solchen Fehlerkennung.

Während es bisher bei der eingangs genannten, bekannten Anordnung nach Erlangung der Kenntnis von einer funktionsfähigen Fälschung notwendig war, die Kodierung, also das gesamte Kodierungsmuster, zu ändern, da nicht bekannt war, wie vollkommen dieses Muster gefälscht wurde, kann man beim erfindungsgemäßen Hologramm davon ausgehen, daß es nicht gelingt, dieses in seiner Gesamtheit zu fälschen, soweit nicht der hierfür erforderliche, enorme technische Aufwand gerechtfertigt ist. Es würde daher bei Verwendung beispielsweise eines räumlichen Hologramms genügen, durch Verändern der Tiefenschärfe der Optik des Lichtempfängers eine andere Betrachtungsebene der Abbildung im Hologramm zu wählen und in dieser Betrachtungsebene neue Betrachtungspunkte festzulegen.

Gemäß einer bevorzugten Ausgestaltung der Erfindung aber ist zwischen der Lichtquelle und dem Kodierungsfeld eine Entparallelisierungseinrichtung angeordnet, die dafür sorgt, daß das im Lichtempfänger erzeugte Bild des Holgramms gegenüber einem durch parallele Lichtstrahlen erzeugten Bild verzerrt ist. Hierbei bewirkt die Verzerrung, daß eine nur sehr geringfügige Abweichung eines Bildpunktes im Hologramm, die wegen der Ablesegenauigkeit des Bildempfängers unerkannt bliebe, so erheblich verstärkt wird, daß diese Ungenauigkeit das Erkennen durch die erfindungsgemäße Anordnung unmöglich macht. Es wäre nämlich grundsätzlich denkbar, daß es einem Fälscher gelingt, das Hologramm als solches sichtbar zu machen, ein freies Bild dieses Hologramms zu schaffen und von diesem freien Bild wiederum ein Hologramm herzustellen. Die bei einer solchen Übertragung zwangsläufig auftretenden Verzerrungen und Ungenauigkeiten werden aber infolge der Ausgestaltung der Erfindung durch die Verzerrung so weit verstärkt, daß sie ohne weiteres erkannt werden können.

Als Entparallelisierungseinrichtung kann grundsätzlich eine Sammeloder Streuungslinse dienen; bevorzugt ist aber die Entparallelisierungseinrichtung ihrerseits als Hologramm ausgebildet, das seinerseits dann gegen ein anderes Hologramm ausgewechselt werden kann, wenn beispielsweise ein Fall einer funktionsfähigen Fälschung festgestellt wurde. Hierbei wird - jedoch in noch verbesserter Weise - die gleiche Wirkung erzielt wie jene infolge der Einstellung einer anderen Betrachtungsebene.

Die Entparallelisierungseinrichtung kann gemäß einer anderen Ausgestaltung der Erfindung aber auch derartig verstellbar ausgebildet sein, daß der Einfallswinkel der Lichtstrahlen verändert wird. Dies hat die Wirkung, daß der Lichtempfänger das Hologramm des Kodierungsfeldes nicht mehr von vorne, sondern gewissermaßen von der Seite her betrachtet und somit ein anderes Kodierungsmuster sieht.

Wie bereits oben beschrieben, kann eine Veränderungsmöglichkeit dadurch gewonnen werden, daß man bei einem Hologramm eines räumlichen Musters die Beobachtungsebene durch die Optik des Lichtempfängers verändert. Dies erfordert aber eine sehr genaue Optik, die sich auch durch Wärmeunterschiede und dergleichen nicht verstellen darf. Daher ist bevorzugt gemäß einer weiteren Ausgestaltung der Erfindung das Hologramm als Abbildung eines ebenen Musters ausgebildet; durch die Verzerrung genügt eine verhältnismäßig geringe Abbildungsschärfe, um eine hinlängliche Unterscheidung zu ermöglichen.

Das Hologramm kann vorteilhafterweise als Dichromat-Hologramm angefertigt werden, von dem Kontaktabzüge hergestellt werden. Es ist aber auch bekannt, Hologramme in einem Druckverfahren zu vervielfältigen. In jedem Fall besteht grundsätzlich die Gefahr, daß vom Hologramm des zu erkennenden Gegenstands durch einen Fälscher ein Kontaktabzug hergestellt wird, der seinerseits zwar gegenüber dem das Kodierungsfeld bildenden Hologramm eine so weit verschlechterte Abbildung darstellen kann, daß infolge der Entparallelisierung des in das Hologramm einfallenden Lichtes sich die Abweichungen vom Original-Kodierungsfeld so stark auswirken, daß keine Erkennung mehr gewährleistet ist.

Um aber das Anfertigen von Kontaktkopien überhaupt unmöglich zu machen, ist gemäß einer weiteren, bevorzugten Ausgestaltung der Erfindung das Kodierungsfeld eingetrübt. Hierbei ist es möglich, das auf einem Filmmaterial abgebildete Hologramm zwischen zwei transluziden Folien einzubetten. Bevorzugt aber wird dieser Film selbst an seiner Oberfläche z.B. durch Ätzen aufgerauht, so daß es auch nicht möglich ist, durch Zerlegen des Kodierungsfeldes zu einem kopierfähigen Hologramm zu gelangen.

Die Trübung des Kodierungsfeldes ist hierbei so gewählt, daß die Ablesegenauigkeit durch den Lichtempfänger nicht beeinträchtigt wird.

Der Lichtempfänger kann als eine Anordnung einzelner Fotodioden an den den Erkennungspunkten entsprechenden Stellen ausgebildet sein; gemäß einer bevorzugten Ausgestaltung der Erfindung ist der Lichtempfänger jedoch als CCD-Platte ausgebildet, wie sie auch etwa in Videokameras verwendet wird. Das hohe Auflösungsvermögen einer solchen Platte ermöglicht die Erkennung auch sehr komplizierter Muster, so daß hiermit eine sehr große Fälschungssicherheit erreichbar ist.

Das vom Lichtempfänger erhaltene Muster wird im Rechner mit einer abgespeicherten Information verglichen, die dessen Programminhalt bildet und dem Soll-Muster entspricht. Gemäß einer bevorzugten Ausgestaltung der Erfindung ·ist der Rechner dazu eingerichtet, auf eine Anweisung hin einen aufgenommenen Signaleingang als solchen Programminhalt abzuspeichern. Es ist somit möglich, nach Plazieren eines Original-Kodierungsfeldes an der Erkennungsstation und nach willkürlicher Einstellung der Entparallelisierungseinrichtung das gewonnene Bild als Sollmuster so lange abzuspeichern, bis Kodierungsfelder mit anderen Mustern oder eine andere Einstellung der Entparallelisierungseinrichtung gewählt werden.

In der Praxis ist, wie es etwa bei Bankautomaten der Fall ist, eine große Anzahl erfindungsgemäßer Anordnungen vorgesehen, die jeweils dazu eingerichtet sind, ein und dasselbe Kodierungsfeld als richtig zu erkennen.

Wenn nun bei allen diesen Einrichtungen eine unterschiedliche Entparallelisierung des das Kodierungsfeld beleuchtenden Lichtstrahls vorgenommen wird, wie es sich ohnehin einstellen wird, wenn man die Entparallelisierungseinrichtungen nicht mit äußerster Genauigkeit justiert, dann wird nur das Original-Hologramm von allen diesen Anordnungen übereinstimmend als richtig erkannt; eine auch nur in einer einzigen Einzelheit, die zur Erkennung herangezogen wird, geringfügig abweichende Kopie wird mit höchster Wahrscheinlichkeit von mindestens einer der Anordungen als falsch erkannt, so daß z.B. ein gefälschtes Wertpapier wie etwa eine Banknote, ein Wechsel oder dergleichen, das sich im Umlauf befindet, im Verlaufe dieses Umlaufes irgendwann - und wahrscheinlich sehr bald - nicht und somit als falsch erkannt wird.

Außerdem ist es durch die letztgenannte Ausgestaltung der Erfindung um gekehrt möglich, an einer Anordnung mit geringstem Arbeitsaufwand turnusmäßig die Entparallelisierung zu verstellen, so daß wiederum nach verhältnismäßig kurzer Zeit ein von dem Original auch nur geringfügig abweichendes Kodierungsfeld nicht und somit als falsch erkannt wird.

Es ist daher möglich, durch die erfindungsgemäße Anordnung nicht nur die Türschlösser von Wohnungen, Geschäftsräumen und Fabrikationsanlagen zu sichern, sondern auch die sehr anspruchsvolle Sicherung von militärischen und zivilen Sicherheitsbereichen, Tresorräumen und dergleichen vorzunehmen.

Hierbei ist es ohne weiteres möglich, zwei oder mehrere erfindungsgemäße Anordnungen so miteinander zu kombinieren, daß sie nur dann ein Erkennungssignal abgeben, wenn an mehreren Erkennungsstationen gleichzeitig ein jeweils gleichartiges oder unterschiedliches Hologramm vorliegt. Es ist auch möglich, den Rechner so weiterzubilden, daß er mehrere Soll-Bilder einspeichert, so daß ein Erkennungssignal beispielsweise nur dann abgegeben wird, wenn zwei unterschiedliche Hologramme in einer vorgegebenen Reihenfolge hintereinander in die Erkennungsstation gelangen.

Somit ist es durch die Erfindung möglich, auch sehr anspruchsvolle Sicherheitsbereiche, deren Zutritt nur mehreren ausgewählten Personen gleichzeitig möglich sein soll, abzusichern.

Es können auf die Erkennung unterschiedlicher Hologramme auch unterschiedliche Signale abgegeben werden und somit unterschiedliche Vorgänge ausgelöst werden.

Es ist aber auch möglich, mit Varianten versehene Hologramme zu verwenden; so kann z.B. ein und dasselbe Hologramm von mehreren, unterschiedlich programmierten Anordnungen erkannt werden, die auch noch jeweils ein anderes Hologramm erkennen, das seinerseits jedoch nicht von den anderern Anordnungen erkannt wird; so kann z.B. das Wachpersonal in einem Sicherheitsbereich Zutritt zu allen Zonen haben, zu denen sonst nur jeweils die dort beschäftigten Mitarbeiter Zutritt haben.

Die erfindungsgemäße Anordnung kann überall dort eingesetzt werden, wo eine größere Anzahl von Gegenständen rasch auf ihre Originalität überprüft werden müssen, wie z.B. Scheck- und Kreditkarten.

Gemäß einer bevorzugten Ausgestaltung der Erfindung ist jedoch der das Kodierungsfeld tragende Gegenstand als Jeton ausgebildet, der anstelle von Bargeld in Spielbanken verwendet wird.

Solche Jetons müssen ebenso wie Bargeld fälschungssicher sein, wobei aber nicht, wie im normalen Geldumlauf, bei Auftauchen bestimmter Fälschungen die entsprechenden Jetons in Ruhe geprüft werden können, sondern der reibungslose Spielbetrieb duldet keinerlei Aufschub; außerdem ist das den Spielbetrieb überwachende Personal mit seiner Tätigkeit voll ausgelastet und kann sich nicht auch noch um die Richtigkeit der umlaufenden Jetons kümmern. Die sofortige Erkennung falscher Jetons war daher besonders bei guten Fälschungen so gut wie ausgeschlossen.

Man hat sich daher bemüht, durch komplizierte Verfahren solche Jetons herzustellen, die leicht erkennbare, aber schwer nachahmbare Erkennungsmerkmale aufwiesen.

Erfindungsgemäß ist ein Jeton mit einem Kodierungsfeld versehen, das in wesentlich besserer Weise und ohne Aufschub die praktisch zweifelsfreie Erkennung echter oder gefälschter Jetons ermöglicht. Hierbei sind die Aufwendungen, die zur Herstellung und Anbringung des erfindungsgemäßen, mit einem Hologramm ausgestatteten Kodierungsfeldes erforderlich sind, erheblich niedriger als jene Aufwendungen, die man bisher aufbringen mußte, um die bisherigen Jetons herzustellen, deren Fälschung einigermaßen erschwert war.

Es ist durch die Erfindung auch bei laufendem Spielbankbetrieb möglich, daß eine große Anzahl von Jetons rasch und zuverlässig auf seine Echtheit überprüft wird. Hierbei ist es möglich, z.B. bei der Wechselkasse die Erkennungsstation anzuordnen, mit einem Durchlaufschlitz, durch den die Jetons beim Aufzählen rasch hindurchgeschoben werden. Die Jetons können hierbei so ausgebildet sein, daß sie nur zum Teil in den Schlitz eintauchen, so daß sie rasch durch diesen geschoben werden können. Während des Durchschiebens ist es bereits möglich, zu erkennen, ob die Kodierung das ordnungsgemäße Hologramm trägt oder nicht.

Bevorzugt weisen hierbei die Jetons unterschiedlicher Werte auch unterschiedliche Hologramm-Muster auf, um zu verhindern, daß das Kodierungsfeld eines echten, geringwertigen Jetons ausgesägt und zur Fälschung eines höherwertigen Jetons herangezogen wird.

Erkennungsstationen können in einer Spielbank praktisch jeder Person zugeordnet sein, die mit der Handhabung von Jetons betraut ist, wobei die Überprüfung der Jetons auch bei erhöhtem Arbeitsanfall wegen des geringen Arbeitsaufwandes hierfür noch immer stichprobenartig erfolgen kann.

Es ist jedoch erstrebenswert, daß ein falscher Jeton bereits möglichst frühzeitig erkannt wird, also dann, wenn er erstmals in die Hände der Spielbank gelangt und nicht nur dann, wenn er an der Kasse zum Einlösen abgegeben wird, und zwar bevorzugt bereits an jedem Spieltisch, denn ein Fälscher wird ohne Zweifel versuchen, durch Setzen seiner falschen Jetons sich zunächst einmal dieser zu entledigen und nur die gewonnenen, echten Jetons bei der Kasse einzuwechseln.

Die erfindungsgemäße Anordnung ist daher besonders vorteilhaft bei einer Jeton-Sortieranlage eingesetzt, die jeweils einem Spieltisch, insbesondere einem Roulette-Tisch zugeordnet ist. Diese Jeton-Sortieranlage, die ebenso wie die oben beschriebene Anordnung und das dieser zugrundeliegende Verfahren ausdrücklich Gegenstand der Erfindung ist, weist eine Jeton-Sammelstelle auf, die bevorzugt als Einwurfschacht ausgebildet ist und in welche nach jedem Spiel alle dem Spielfeld durch die Bank entnommenen Jetons eingebracht werden. Im Falle eines Einwurfschachtes mündet dieser von unten her in den Spiel- bzw. Roulettetisch ein.

Die Sammeleinrichtung kann zusätzlich zum Einwurfschacht auch einen Zwischenspeicher sowie eine Vereinzelungseinrichtung aufweisen, welche bevorzugt dem Zwischenspeicher vorgeschaltet ist, so daß in diesem die Jetons bereits in einer gewissen, für die weitere Behandlung geeigneten Orientierung angeordnet sind.

Über Fördereinrichtungen, bevorzugt etwa ein Förderband, sind die Jeton-Sammeleinrichtungen mit mindestens einer Anordnung zum Erkennen von Jetons verbunden, welche auf die oben beschriebene Weise aufgebaut ist, wobei die Fördereinrichtung so angeordnet ist, daß der Jeton in der oder jeder Anordnung deren Erkennungsstation durchläuft.

Dieser Anordnung kann bevorzugt eine Auswurfeinrichtung zugeordnet sein, etwa in Form eines anschaltbaren, quer zum Förderband gerichteten Luftstrahls, welche jedesmal dann ausgelöst wird, wenn der Rechner ein Nichterkennungssignal abgibt. In diesem Fall wird dann auch eine offene oder verdeckte und dann nur dem Spielbankpersonal sichtbare Alarmeinrichtung betätigt; der verdächtige Jeton kann nun entnommen und in Ruhe geprüft werden, und sollte es sich tatsächlich um einen gefälschten Jeton handeln, dann können sofort gleichartige Jetons aus dem Umlauf gezogen und durch andersartige ersetzt werden.

Die erfindungsgemäße Jeton-Sortieranlage weist ferner Einrichtungen auf, um die erkannten Jetons wieder auf den Spieltisch zu fördern und dort an den vorgesehenen Stellen, etwa dem Lagebrett eines Roulettetisches, geordnet abzulegen.

Wie bereits oben erwähnt, kann es zweckmäßig sein, daß Jetons unterschiedlicher Werte unterschiedliche Hologramme im Kodierungsfeld tragen. In diesem Fall wird ein Jeton nur dann als unzutreffend gekennzeichnet ausgestoßen, wenn das in dessen Kodierungsfeld sichtbare Muster mit keinem der vorschriftsmäßigen Muster hinlänglich übereinstimmt.

Es ist aber auch möglich, den Rechner so weiterzubilden, daß er in Abhängigkeit von dem jeweils als richtig erkannten Muster in der der Erkennungsstation nachgeordneten Fördereinrichtung eine Weiche oder Umschalteinrichtung ansteuert, so daß durch die erfindungsgemäße Anordnung zum Erkennen der Jetons diese auch dem Wert nach geordnet werden können.

Bevorzugt ist bei einem Roulettetisch unterhalb des Lagebretts ein Ringförderer vorgesehen, der nur einen Jeton eines bestimmten Wertes bis zu einer diesem Wert zugeordneten Hubeinrichtung fördert, mittels deren der dem Jeton entsprechende Speicherplatz im Lagebrett nachgefüllt wird.

Durch die erfindungsgemäße Jeton-Sortieranlage werden nicht nur die Croupiers entlastet, so daß sie entweder ihren sonstigen Funktionen mit größerer Aufmerksamkeit nachgehen können oder zusätzliche Funktionen übernehmen können, sondern es wird praktisch jeder Jeton, sobald er in den Besitz der Bank gelangt, sofort einer Prüfung auf Richtigkeit unterzogen, so daß das das Auftreten von Fälschungen zum frühestmöglichen Zeitpunkt erkannt wird. Hierbei erfolgt diese ständige Kontrolle völlig unbemerkt vom Spieler, so daß dieser nicht das Gefühl hat, ihm werde ständig Mißtrauen entgegengebracht.

Der Gegenstand der Erfindung wird anhand der beigefügten, schematischen Zeichnung beispielsweise noch näher erläutert; in dieser zeigt:

Fig. 1 eine schematische Darstellung einer Anordnung zum Erkennen von Jetons,

Fig. 2 den schematischen Grundriß einer erfindungsgemäßen Jeton-Sortieranlage,

Fig. 3 eine Ansicht der Anlage der Fig. 2 aus Richtung 111 in Fig. 2, und

Fig. 4 eine Teilansicht der in Fig. 2 gezeigten Anlage aus Richtung IV in Fig. 2, in anderem Maßstab.

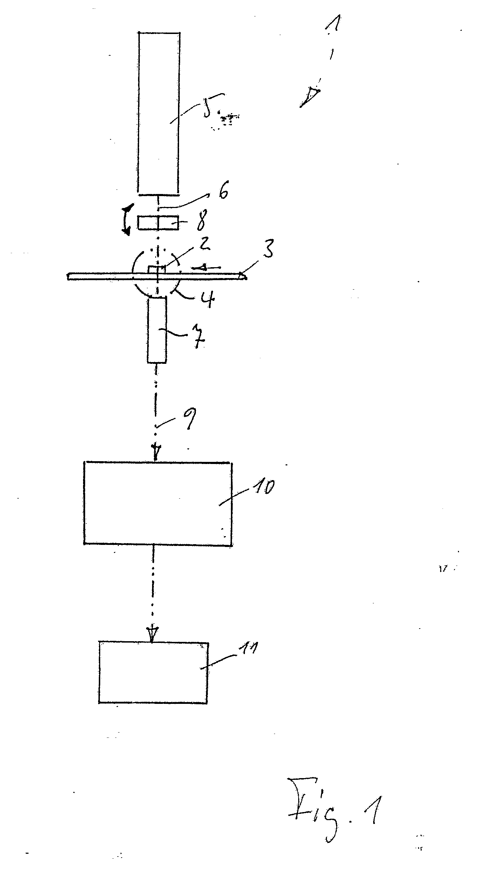

In Fig. 1 ist eine Anordnung 1 zum Erkennen von Jetons 2 gezeigt, die auf einem Förderband 3 in Pfeilrichtung die Anordnung 1 im Bereich einer Erkennungsstation 4 durchlaufen. Beiderseits des Förderbandes 3 ist auf der einen Seite des Jetons 2 eine Lichtquelle 5 für kohärentes Licht angeordnet, die etwa als Laser ausgebildet ist. Die Lichtquelle 5 sendet einen Lichtstrahl 6 aus, der durch den Jeton im Bereich eines Kodierungsfeldes (nicht gezeigt) hindurchtritt und in einen mit einer CCD-Empfangsplatte ausgerichteten Lichtempfänger 7 einfällt.

Zwischen der Lichtquelle 5 und dem Jeton 2 ist auf dem Weg des Lichtstrahls 6 eine Entparallelisierungseinrichtung 8 angeordnet, die als Vorsatzlinse ausgebildet ist, die ein Musterhologramm trägt, durch das der Lichtstrahl 6 hindurchfällt.

Die Entparallelisierungseinrichtung 8 kann in Pfeilrichtung hin- und hergeschwenkt werden.

Der Lichtempfänger 7 ist über eine Signalleitung 9 mit einem Rechner 10 verbunden, dessen Ausgang mit einer Auswerf- und Alarmeinrichtung 11 verbunden ist.

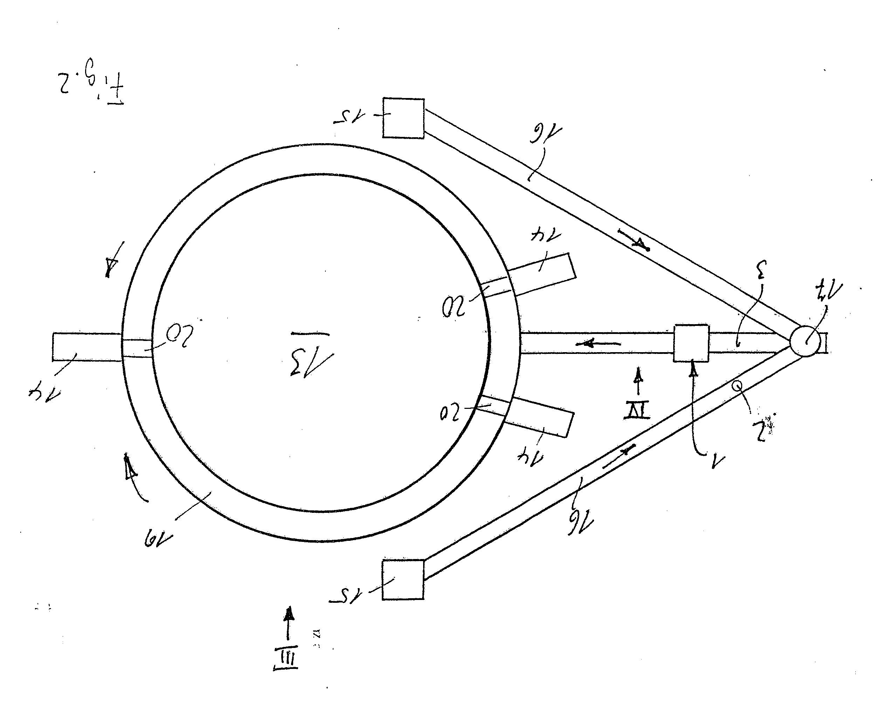

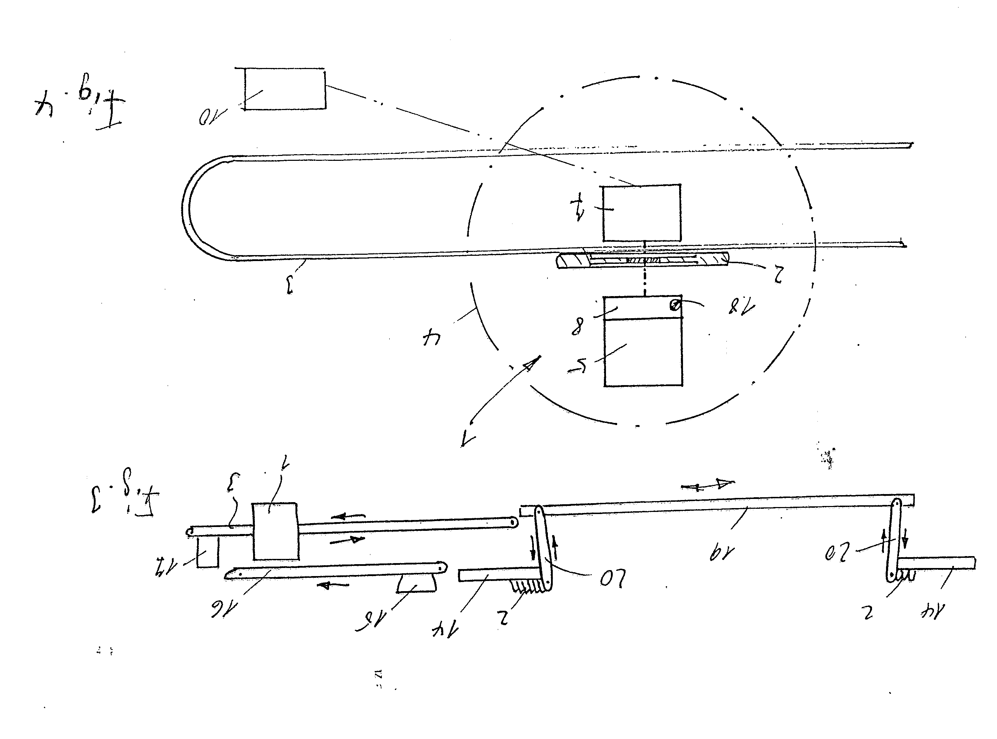

Der Jeton 2 weist, wie aus Fig. 4 ersichtlich, ein mittig angeordnetes Kodierungsfeld 12 auf, das vom Lichtstrahl 6, der die Entparallelisierungseinrichtung 8 verläßt, durchdrungen wird.

Dieser Lichtstrahl 6, der den Laser 5 als Büpndel paralleler Einzelstrahlen parallel verlassen hat, wird in der Einrichtung 8 entparallelisiert und liefert somit eine verzerrte Darstellung des im Kodierungsfeld 12 befindlichen Hologramms. Diese Darstellung wird vom Lichtempfänger 7 aufgenommen und über die Leitung 9 an den Rechner 10 als Signalkombination weitergegeben.

Im Rechner 10 befindet sich eine gespeicherte Signalkombination, die dem Sollwert entspricht und die mit der ankommenden Signalkombination verglichen wird. Je nach Ausfall dieses Vergleiches gibt der Rechner 10 kein Signal ab (der Jeton 2 ist erkannt und somit echt) oder er gibt an die nachgeordnete Auswurf- und Alarmeinrichtung 11 ein Ansteuersignal ab, welches bewirkt, daß der zugehörige Jeton 2 auf dem Förderband 3, an jener Stelle, zu der er bis dahin weitergefördert wurde, vom Förderband 3 heruntergeworfen wird und in einen Auswurf fällt. Gleichzeitig kann eine Alarmeinrichtung ausgelöst werden.

In Fig. 2 ist schematisch eine Jeton-Sortieranlage gezeigt, die in einem Roulettetisch eingebaut ist. Dieser Roulettetisch weist einen Roulettekessel 13 auf, der von einem Lagebrett umgeben ist; im vorliegenden Fall sind lediglich drei Fächer 14 schematisch gezeigt, die Ablagestationen des Lagebretts bilden und die jeweils zur Aufnahme gleichartiger Jetons eingerichtet sind.

Beiderseits des Roulettekessels 13 befindet sich in der Spieltischoberfläche eine bevorzugt abdeckbare Öffnung, die nach unten durch einen Füllschacht 15 verlängert wird, von dem aus jeweils ein Förderband 16 zu einem Sammel- und Vorratsbehälter 17 führt, in welchem Jetons 2 dann gesammelt werden, wenn die beiden Förderbänder 16 diese Jetons 2 in einer kürzeren Folge dem Sammelbehälter 17 zuführen, als sie von der in Fig. 1 schematisch gezeigten Anordnung 1 verarbeitet werden können.

Vom Sammelbehälter 17 führt das bereits in Fig. 1 gezeigte Band 3 durch die Erkennungsstation 4 der Erkennungsanordnung 1, wobei der Jeton 2 auf der horizontalen Oberfläche des Bandes aufliegt und mit seinem Kodierungsfeld 12 durch einen vertikalen Lichtstrahl 6 durchdrungen wird, wie dies in Fig. 4 genauer gezeigt ist. Das Band 3 hat hierbei im Bereich des Kodierungsfeldes 12 entweder einen Längsschlitz oder es ist lichtdurchlässig ausgebildet.

Wie aus Fig. 4 noch weiter ersichtlich, sind die Lichtquelle 5 und die Entparallelisierungseinrichtung 8 als Baueinheit zusammengefaßt, wobei eine Einstellschraube 18 die Entparallelisierungseinrichtung 8 verstellt.

Der Lichtempfänger 7 ist unterhalb des für den Lichtstrahl 6 durchlässigen Bandes 3 angeordnet und ist mit dem gegebenenfalls abgesetzten Rechner 10 verbunden.

Wie aus Fig. 4 weiter ersichtlich, endet das Förderband 3 unterhalb des Lagebrettes in einem Ringförderer 19, der bei Bedarf in jeder der beiden jeweils durch einen Pfeil gezeigten Förderrichtungen umlaufen kann, um die Jetons auf dem kürzesten Wege jenem Teil 14 des Lagebretts zuzuführen, in welchem diese Jetons abgelegt werden sollen.

Hierbei wird über einen Rechner die Erkennung der Jetons nach Größe bzw. Wert und die entsprechende Ansteuerung des Ringförderers 19 gesteuert.

Wie aus Fig. 3 ersichtlich, sind die Fächer 14 des Lagebretts oberhalb des Ringförderers 19 angeordnet und über Elevatoren 20 mit diesen verbunden.

**Patentansprüche**

1. Anordnung zum Erkennen von Gegenständen, mit
- einer Lichtquelle zum Aussenden eines Lichtstrahls oder -bündels,
- einem von der Lichtquelle beleuchtbaren, ein Muster tragenden Kodierungsfeld, das am Gegenstand angebracht ist oder diesen bildet,
- einer Erkennungsstation, in welcher das Kodierungsfeld im Lichtstrahl bzw. Lichtbündel so lange positionierbar ist, bis die Erkennung abgeschlossen ist,
- einem Lichtempfänger, der der Erkennungsstation gegenüberliegerd in dem von dieser ausgehendem Licht der Lichtquelle angeordnet ist und zum Aufnehmen oder Abtasten des durch das Kodierungsfeld fallenden bzw. veränderten Lichtstrahls sowie zur Abgabe entsprechender Signale eingerichtet ist, und

-einem an den Lichtempfänger angeschlossenen Rechner, der so programmiert ist, daß er bei Übereinstimmen oder Nichtübereinstimmen der vom Lichtempfänger abgegebenen Signale mit dem jeweiligen Programminhalt ein Erkennungssignal oder ein Nichter kennungssignal abgibt,

dadurch **gekennzeichnet**, daß

-die Lichtquelle (5) zur Abgabe kohärenten Lichtes eingerichtet und bevorzugt als Laser ausgebildet ist, und

-das Muster des Kodierungsfeldes (12) als Hologramm ausgebildet ist.

2. Anordnung nach Anspruch 1, dadurch gekennzeichnet, daß zwischen der Lichtquelle (5) und dem Kodierungsfeld (12) eine Entparallelisierungseinrichtung (8) angeordnet ist.

3. Anordnung nach Anspruch 2, dadurch gekennzeichnet, daß die Entparallelisierungseinrichtung (8) als Hologramm ausgebildet ist.

4. Anordnung nach einem der Ansprüche 2 oder 3, dadurch gekennzeichnet, daß die Entparallelisierungseinrichtung (8) verstellbar (18) ausgebildet ist.

5. Anordnung nach einem der Ansprüche 2 bis 4, dadurch gekennzeichnet, daß die Entparallelisierungseinrichtung (8) austauschbar ausgebildet ist.

6. Anordnung nach einem der Ansprüche 1 bis 5, dadurch gekennzeichnet, daß das Hologramm des Kodierungsfeldes (12) als Abbildung eines ebenen Musters ausgebildet ist.

7. Anordnung nach einem der Ansprüche 1 bis 6, dadurch gekennzeichnet, daß das Kodierungsfeld (12) zum Verhindern der Herstellung von Kontaktkopien eingetrübt ist.

8. Anordnung nach einem der Ansprüche 1 bis 7, dadurch gekennzeichnet, daß der Lichtempfänger (5) als Empfangseinheit eine CCD-Platte aufweist.

9. Anordnung nach einem der Ansprüche 1 bis 8, dadurch gekennzeichnet, daß der Rechner (10) dazu eingerichtet ist, einen aufgenommenen Signaleingang als Programminhalt abzuspeichern.

10. Anordnung nach einem der Ansprüche 1 bis 9, dadurch gekennzeichnet, daß der das Kodierungsfeld (12) tragende Gegenstand als Jeton (2) ausgebildet ist.

11. Verwendung der Anordnung nach Anspruch 10 in einer Jeton-Sortieranlage, die jeweils einem Roulettetisch zugeordnet ist und bevorzugt die folgenden Merkmale aufweist:

-mindestens ein Jeton-Einwurfschacht (15), dessen Einwurföffnung von unten her in den Roulettetisch einmündet,

- jeweils eine jedem der Einwurfschächte (15) zugeordnete Sammelund Vereinzelungseinrichtung (17, 16),

- jeweils eine jeder der Sammel- und Vereinzelungseinrichtungen (17, 16) nachgeordnete, bevorzugt als Förderband (3) ausgebildete Fördereinrichtung, die jeweils eine Erkennungsstation (4) aufweist,

- eine dem Rechner (10) der jeweiligen Erkennungsstation zugeordnete Alarm- und/oder Auswurfeinrichtung (11) zum Anzeigen und Aussondern eines falsch oder nicht kodierten Jetons (2), und

- eine Einrichtung (19, 20) zum Rückfördern der bevorzugt sortierten Jetons (2) zum Spieltisch.

Fig. 1

EP 0 337 921 A2

Fig. 2

Fig. 4

Fig. 3